Europäisches Patentamt

European Patent Office

Office européen des brevets

(19)

(11) EP 0 935 775 B1

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: **97944680.4**

(22) Anmeldetag: **29.10.1997**

(51) Int Cl.$^7$: **G02B 27/14**, G02B 5/04

(86) Internationale Anmeldenummer:
**PCT/CH97/00411**

(87) Internationale Veröffentlichungsnummer:
**WO 98/020383 (14.05.1998 Gazette 1998/19)**

(54) **OPTISCHES BAUELEMENT UND VERFAHREN ZU SEINER HERSTELLUNG**

OPTICAL COMPONENT AND PROCESS FOR PRODUCING THE SAME

COMPOSANT OPTIQUE ET SON PROCEDE DE FABRICATION

(84) Benannte Vertragsstaaten:
**BE CH DE ES FR GB IT LI NL**

(30) Priorität: **01.11.1996 CH 269496**

(43) Veröffentlichungstag der Anmeldung:
**18.08.1999 Patentblatt 1999/33**

(73) Patentinhaber: **Unaxis Balzers Aktiengesellschaft**
**9496 Balzers (LI)**

(72) Erfinder: **EDLINGER, Johannes**
**A-6820 Frastanz (AT)**

(74) Vertreter: **Troesch Scheidegger Werner AG**
**Patentanwälte**
**Postfach**
**8032 Zürich (CH)**

(56) Entgegenhaltungen:
**EP-A- 0 359 461**    **EP-A- 0 359 658**
**DE-A- 4 033 842**    **GB-A- 754 590**
**US-A- 2 737 076**    **US-A- 5 237 442**
**US-A- 5 260 830**    **US-A- 5 453 859**

- **PATENT ABSTRACTS OF JAPAN vol. 013, no. 424 (P-934), 21.September 1989 & JP 01 156701 A (SEIKO EPSON CORP), 20.Juni 1989,**

Bemerkungen:
Die Akte enthält technische Angaben, die nach dem Eingang der Anmeldung eingereicht wurden und die nicht in dieser Patentschrift enthalten sind.

EP 0 935 775 B1

## Beschreibung

Die vorliegende Erfindung betrifft ein optisches Bauelement, welches einen Grundkörper und ein optisch wirksames Schichtsystem umfasst, welches mit mindestens der einen Schichtsystemfläche am Grundkörper liegt, nach dem Oberbegriff von Anspruch 1 bzw. 8.

Die Erfindung betrifft weiter ein Verfahren zu dessen Herstellung nach dem Oberbegriff von Anspruch 20, eine Verwendung eines solchen Bauelementes bzw. Verfahrens nach Anspruch 41 sowie eine optische Projektionsanordnung bzw. eine CCD-Kamera mit einem solchen Bauelement nach Anspruch 42 bzw. 43.

Einleitung:

Z.B. in der DE-40 33 842 wird ein quaderförmiger, aus Einzelprismen mit dichroitischen Schichten zusammengesetztes optisches Bauelement als "dichroitisches Prisma" bezeichnet.

In der vorliegenden Schrift wird für ein solches Bauelement der Ausdruck

X-Cube

verwendet.

Die vorliegende Erfindung geht aus von Problemen, die bei bekannten X-Cubes bestehen, wie sie eben beispielsweise in der DE-40 33 842 beschrieben sind, beziehungsweise bei deren Herstellung. Die vorliegende Erfindung, die aufgrund der Problemlösung an solchen Bauelementen gefunden wurde, kann aber auf eine Vielzahl anderer optischer Bauelemente angewandt werden.

Deshalb geht die vorliegende Beschreibung von den spezifisch an X-Cubes zu lösenden Problemen aus, um dann, verallgemeinernd, den Einsatz der Erfindung mehr grundsätzlich zu erläutern.

Beschreibung:

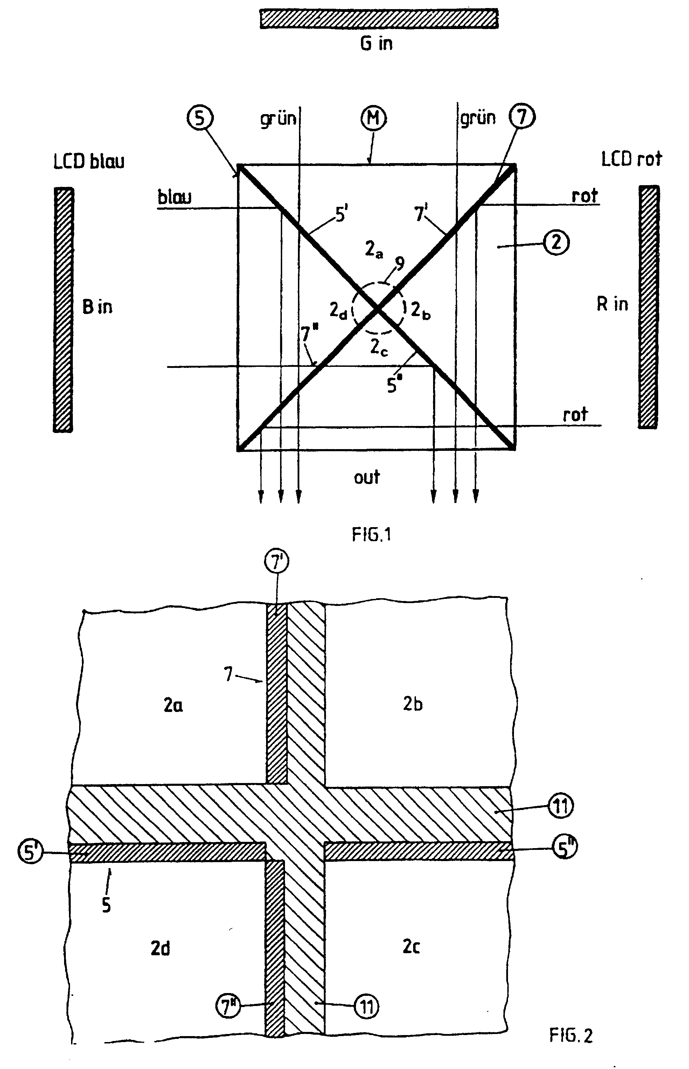

Anhand von Fig. 1 soll vorerst die grundsätzliche Wirkungsweise eines X-Cubes erläutert werden. Optische Bauteile dieser Art werden hauptsächlich in Projektoren eingesetzt, um im Spektralbereich des sichtbaren Lichtes Rot-/ Grün- und Blaukanäle zu rekombinieren. Gemäss Fig. 1 umfasst ein solcher X-Cube 1 vier Einzelprismen 2a bis 2d. Dabei kann es sich beispielsweise um Glasprismen aus BK7-Glas handeln. Im Querschnitt bilden sie rechtwinklig gleichschenklige Dreiecke mit einem 90°-Winkel, üblicherweise mit Toleranzen von mehr ± 60 Winkelsekunden und Hypotenusenwinkeln von 45°, bei Toleranzen von einigen Winkelminuten. Die Länge der Hypotenuse beträgt typischerweise zwischen 5 mm und 50 mm, vorzugsweise 40 mm. Zwischen den beiden Prismenpaaren 2a und 2b einerseits, 2d und 2c anderseits ist eine optisch wirksame Schicht 5 eingebettet, welche sichtbares Licht im Blaubereich weitestgehend reflektiert, hingegen sichtbares Licht im Grünbereich bzw. im Rotbereich weitestgehend transmittiert. In Fig. 1 ist ein Teil dieses Blaureflektor-Schichtsystems, als Farbteilersystem, mit 5', der andere mit 5'' bezeichnet.

Zwischen den beiden Prismenpaaren 2a und 2d einerseits, 2b und 2c anderseits ist ein weiteres optisch wirksames Schichtsystem 7 eingebettet, welches sichtbares Licht im Rotbereich weitestgehend reflektiert, hingegen im Grünbereich und im Blaubereich weitestgehend transmittiert. In Fig. 1 sind ebenfalls die beiden Schenkel des Rotreflektor-Schichtsystems, als Farbteilersystem, mit 7' und 7'' bezeichnet.

Am X-Cube ergeben sich mithin drei Eingangskanäle für Rot-, Grün- und Blaulicht von entsprechenden Quellen, beispielsweise LCD-gesteuert, und ein Ausgangskanal mit den rekombinierten Eingangssignalen. An den Reflektorensystemen je zwischen den angesprochenen Prismenpaaren erfolgt Reflexion des unter 45° einfallenden, entsprechend farbigen Lichtes, insbesondere S-polarisierten Lichtes. Im weiteren können und sind üblicherweise die Hypotenusenflächen der Prismen 2 mit einem Antireflexschichtsystem beschichtet.

Weil sich die Pixel der Rot-Blau-Grün-Eingangskanäle möglichst exakt überdecken sollen, müssen die Winkeltoleranzen an den Prismen 2 und im zusammengestellten X-Cube 1 sehr klein sein.

Zu grosse Toleranzen ergeben eine schlechte Abbildungsqualität, da sich die Bilder nicht sauber decken: Es treten Unschärfen bzw. Farbsäume auf.

Der in Fig. 1 gestrichelt eingetragene Ort 9, wo die vier Einzelprismen 2 aufeinandertreffen, befindet sich auch im abbildenden Strahlengang. Optische Störungen, die an diesem Ort erzeugt werden, schlagen sich im Bild im Ausgangskanal OUT wie erwähnt z.B. als Unschärfen nieder. Es ist eine Forderung an solche Bauteile und deren Herstellverfahren, dass insbesondere an diesem Ort 9 entstehende Störungen minimiert werden.

Es ist beispielsweise aus der DE-40 33 842 bekannt, X-Cubes aus vier Prismen 2 gemäss Fig. 1 herzustellen. Die vier einzelnen Prismen werden zuerst durch Fräsen, Schleifen und Polieren in ihren Dimensionen exakt hergestellt. Darnach erfolgt entlang ihrer Kathetenflächen die Beschichtung mit dem entsprechend notwendigen Schichtsystem und, gegebenenfalls, an deren Hypotenusenflächen mit einem entspiegelnden Antireflex-Schichtsystem. Schliesslich werden die beschichteten Einzelprismen 2 verkittet.

Bereits wesentlich früher als die DE-OS 40 33 842, nämlich aus der US-A-2 737 076, war es bekannt, dass bei Vorsehen unterschiedlicher optischer Schichtsysteme an den Kathetenflächen von Prismen, am Scheitelpunkt, also gemäss Fig. 1 im Bereich 9, Probleme bezüglich der Schichtsystem-Stossstelle entstehen. Um dieses Problem zu lösen, wird in dieser Schrift vorgeschlagen, an jeweils zwei 90°-Prismen je eine Kathetenfläche mit einer Maskierungsschicht zu versehen und die beiden Prismen mit den maskierten Flächen so aneinanderzulegen, dass die beiden anderen Kathetenflächen fluchten. Diese werden mit Sulfid- und Fluoride-Schichten versehen. Darauf werden die Prismen wieder auseinandergebrochen, eine bereits beschichtete und eine Kathetenfläche eines unbeschichteten Prismas maskiert, aneinandergelegt, und es werden, nach Entfernung der vormals aufgebrachten Maskierung, die unbeschichteten, ebenfalls fluchtend angeordneten Kathetenflächen mit Zink-Sulfid und Blei-Fluoride-Schichten - letzteres Material ein kumulativ wirkendes Kontaktgift - versehen. Wiederum werden die Prismen getrennt. Nun werden vier der wie beschrieben beschichteten Einzelprismen zu einem X-Cube vereinigt, nach Entfernen des Maskenmaterials mittels Lösungsmitteln.

In einer Weiterentwicklung geht die GB-754 590 davon aus, dass es äusserst schwierig sei, die bereits beschichteten Einzelprismen präzise zu vereinen. Deshalb wird hier wie folgt vorgegangen:

- Zwei 90°-Prismen werden Scheitel an Scheitel mit jeweils ausgerichteter einen Kathetenfläche so positioniert, dass zwischen den beiden anderen, sich gegenüberliegenden Kathetenflächen ein Spalt entsteht.

- Der Spalt wird im Scheitelbereich mittels einer löslichen Maske verschlossen.

- Die fluchtenden Kathetenflächen werden gemeinsam beschichtet, die Prismen wieder getrennt und die Maske entfernt. Dabei sollte erreicht werden, dass die Beschichtung parallel zum Scheitel bricht.

- Eine beschichtete Kathetenfläche und eine Kathetenfläche eines unbeschichteten Prismas werden, unter Ausrichtung der jeweils anderen Kathetenflächen auf einem optisch flachen Block, verkittet, wobei Austreten von Kitt am Scheitel durch Abdeckungen, die an den fluchtenden Flächen entfernbar angekittet werden, verhindert wird.

- Die fluchtende Fläche des Prismenpaares wird, nach Entfernen der Abdeckung und ausgetretenen Kitts, beschichtet.

- Ein so beschichtetes und ein an den fluchtenden Flächen nicht beschichtetes Prismenpaar werden unter minutiöser Überwachung und Einstellung ihrer Relativlage verkittet.

Nachteile bekannter Verfahren und bekannter X-Cubes

- Der Aufwand an handling der z.B. aus der GB-754 590 oder aus der DE-40 33 842 vorbekannten Vorgehensweise zur Herstellung von X-Cubes ist sehr hoch: Zuerst muss für die Glasbearbeitung jede der drei Seitenflächen der einzelnen Prismen 2 gemäss Fig. 1 eingespannt bzw. gehaltert werden, wie durch Aufgipsen, Verkitten oder Ansprengen. Darnach müssen diese Flächen für die Beschichtung der einzelnen Prismen 2 gereinigt, dann für den Beschichtungsprozess eingespannt und darnach wieder ausgespannt werden. Dabei sind bei der DE-40 33 842 durchschnittlich zwei Seiten pro Einzelprisma zu beschichten. Dieses aufwendige handling treibt die Kosten für die Herstellung derartiger X-Cubes nachhaltig in die Höhe.

- Mit Blick auf Fig. 1, insbesondere Partie 9, ist ersichtlich, dass die Beschichtung der als Rot- und Blaureflektoren dienenden Schichtsysteme so vorgenommen werden muss, dass keine Beschichtung um die 90°-Kanten herum an den Einzelprismen erfolgt. Dies bedingt einen hohen Aufwand an den Beschichtungshalterungen bzw. für die Abdeckung der nicht zu beschichtenden Katheten. Diesbezüglich wird auf die Abdeckungen gemäss der GB-754 590 und der US-A-2737076 (Rock et al.) verwiesen.

- Bei der Beschichtung und während des gesamten handlings der Einzelprismen 2 liegen insbesondere die 90°-Prismenkanten ungeschützt offen, gerade diejenigen Kanten, die nach obigen Ausführungen sehr genau sein müssen. Dies führt unweigerlich zu Aussprüngen, wenn man nicht einen hohen Aufwand treibt, diese Kanten äusserst gut zu schützen, was wiederum mit Kosten verbunden ist.

- Geht beispielsweise bei der Beschichtung der Einzelprismen 2 etwas schief, so muss ein solches Einzelstück wieder eingespannt, geschliffen und überpoliert werden, will man es nicht wegwerfen. Korrekturprozesse sind mithin nur umständlich zu implementieren.

- Das Verkitten in exakter Relativposition der Einzelprismen 2 gestaltet sich höchst schwierig und aufwendig. Hierzu müssen komplizierte Vorkehrungen, wie in der DE-40 33 842 beschrieben, vorgesehen werden. Dabei werden z. T. auch bei der GB 754 590 Einzelprismen verkittet, was mit grossem zeitlichen und daher finanziellen Aufwand verbunden ist.

- Ganz unabhängig von den obgenannten Nachteilen entsteht durch das vorbekannte Vorgehen gemäss der DE 40 33 842 im Bereich 9 gemäss Fig. 1 eine Struktur, wie sie, als vergrösserter Ausschnitt, in Fig. 2 dargestellt ist. Darin sind dieselben Bezugszeichen wie in Fig. 1 eingesetzt. Die Positionsnummer 11 bezeichnet die Kittfugen. Gemäss der GB 754 590 ergibt sich die Stossstelle aus einer Bruchlinie, einer Linie, die wohl generell parallel zum betrachteten Prismenscheitel verlaufen mag, deren exakter Verlauf aber kaum beherrschbar ist.

  Daraus ist ersichtlich, dass gemäss DE 40 33 842 die Kittfugen 11 zu einer Unterbrechung sowohl des Rotreflektor-Schichtsystems 7 (aus 7' und 7") wie auch des Blaureflektor-Schichtsystems 5 (aus 5' und 5") führen, und gemäss der GB 754 590 die Stossverbindung des unterbrochenen Schichtsystems an das durchgehende weitgehend zufällig ist.

- Da im weiteren, sowohl gemäss der GB 754 590 wie auch der DE 40 33 842, das X-Cube durch die Verkittung der Einzelprismen 2 erstellt wird, deren 90°-Kanten im Laufe des Herstellungsprozesses ungeschützt Einflüssen ausgesetzt waren, ergeben sich Störungen im Bereich 9 praktisch unausweichlich durch Ausbrüche an den 90°-Kanten der Einzelprismen 2.

Es ist Aufgabe der vorliegenden Erfindung, ausgehend von dem aus der GB 754 590 bekannten Bauelement, ein optisches Bauelement, dabei insbesondere ein X-Cube, vorzuschlagen, welches die anhand von Fig. 2 erläuterten Nachteile nicht aufweist.

Im weiteren ist es Aufgabe der vorliegenden Erfindung, ein Herstellverfahren vorzuschlagen, das die obgenannten Nachteile bei der Herstellung insbesondere der erwähnten X-Cubes nicht aufweist. Das aufzufindende Herstellverfahren soll weiter hohe Wirtschaftlichkeit garantieren, dies bei hoher Präzision und mit reduzierter Zahl Verfahrensschritte.

Bei einem strahlenoptischen Bauelement der eingangs genannten Art wird dies dadurch erreicht, dass die Fläche des Grundkörpers durchgehend oberflächenbearbeitet wird. Damit ist es möglich, das ersterwähnte, flächig durchgehende, optisch wirksame Schichtsystem so auszuführen, dass das zweite Schichtsystem definiert und höchst exakt an die Fläche des ersten stösst. Eine Struktur, wie sie anhand von Fig. 2 erläutert wurde, wird dabei auch vermieden: Es verläuft nämlich, mit Blick auf Fig. 2, eines der Schichtsysteme, vorzugsweise 7, durchgehend, Einzel-Partien 7', 7" existieren nicht mehr. Erfindungsgemäss stösst nun ein zweites Schichtsystem, vorzugsweise vom System 5, 5' exakt und definiert an das durchgehende 7 und, im Falle eines X-Cubes, schliesslich ein drittes, 5". Dies ist in Fig. 2, die bekannte Stossstrukturen zeigt, nicht dargestellt. Ein erfindungsgemässes Bauelement zeichnet sich weiter nach dem Kennzeichen von Anspruch 9 aus.

In einer bevorzugten Ausführungsvariante des erfindungsgemässen Bauelementes bzw. am erfindungsgemässen Bauelement nach Anspruch 9 umfassen die Schichtsysteme eine Abfolge von optisch hoch- und niederbrechenden Schichten. Dabei wird als Material der hochbrechenden Schichten mindestens überwiegend vorzugsweise ein Oxid oder Oxinitrid, vorzugsweise mindestens eines der folgenden eingesetzt:

$TiO_2$, $Ta_2O_5$, $Nb_2O_5$, $HfO_2$, $ZrO_2$, $SiO_xN_y$.

Als Material der niederbrechenden Schichten wird dabei weiter mindestens überwiegend vorzugsweise ein Oxid oder Oxinitrid, dabei vorzugsweise mindestens eines der folgenden Materialien eingesetzt:

$SiO_2$, $Al_2O_3$, $SiO_xN_y$.

Die Packungsdichte der Schichten an den erwähnten erfindungsgemässen Bauelementen ist vorzugsweise mindestens 0,95, dabei gar bevorzugterweise 0,97.

Bezüglich Definition der Packungsdichte sei auf H.A. MACLEOD, "Thin Film Optical Filters", pp. 398, 2nd ed., Adam Hilger Ltd., Bristol, verwiesen.

Die Wahl der angegebenen Schichtmaterialien und deren hohe Packungsdichte ermöglichen es ohne weiteres, wie erwähnt wurde, die Fläche des Grundkörpers und die Breitfläche des zweiten obgenannten Schichtsystems durchgehend gleich mechanisch oberflächenzubearbeiten.

Im weiteren sind in bevorzugter Ausführung des erfindungsgemässen Bauelementes nach Anspruch 1 bzw. am Bauelement nach Anspruch 9 die Schichten oft röntgenamorph. Insbesondere verschieben sich ihre Spektraleigenschaften innerhalb eines Temperaturbereiches von 20°C bis 100°C spektral um höchstens 5 nm.

Am erfindungsgemässen Bauelement nach Anspruch 1 bevorzugt und an demjenigen nach Anspruch 9 erfüllen weiter die Schichtsysteme mechanisch die Norm MIL-M-13508 C (L-T-90 D bzw. A-A113B), und sie erfüllen weiter mechanisch und chemisch die Norm MIL-C-675 B/C.

Das erfindungsgemässe Verfahren zeichnet sich dadurch aus, dass zur Lösung der genannten Aufgabe an mindestens zwei Teilkörpern des Grundkörpers des Bauelementes je eine Oberfläche erstellt wird, wobei die erwähnten zwei Oberflächen an den mindestens zwei Teilkörpern zueinander komplementär sind, d.h. mit engen Toleranzen aufeinanderpassen. Darnach wird mindestens eine dieser komplementären Oberflächen mit einem optisch wirksamen Schichtsystem versehen, wie insbesondere mit dem Rot- bzw. Blaureflektor-Schichtsystem, wenn es sich beim herzustellenden Bauelement um einen X-Cube handelt.

Darnach werden die erwähnten Teilkörper entlang der genannten komplementären Oberflächen mit nun dazwischenliegendem Schichtsystem miteinander verbunden, z.B. durch Verkitten. Damit wird ein zusammengesetzter Teilkörper gebildet. Am zusammengesetzten Teilkörper wird eine den mindestens zwei Teilkörpern gemeinsame Oberfläche mechanisch oberflächenbearbeitet, welche gewinkelt zu den komplementären, miteinander verbundenen Oberflächen liegt, womit die komplementären Oberflächen, entlang welchen die Teilkörper verbunden sind, an die gemeinsame, bearbeitete Oberfläche stossen, gemeinsam mit dem dazwischenliegenden Schichtsystem. Schliesslich wird entlang dieser gemeinsam mechanisch bearbeiteten Oberfläche ein weiteres optisch wirksames Schichtsystem aufgebracht.

Bevorzugte Ausführungsformen des erfindungsgemässen Bauelementes bzw. Verfahrens sind in den abhängigen Ansprüchen spezifiziert.

Betreffs der erwähnten erfindungsgemässen Verfahrens ist, unter anderem, ein wesentlicher Aspekt für rationelle und damit kostengünstige Fertigung auch darin zu sehen, dass das Bauelement aus quaderförmigen Teilkörpern zusammengesetzt wird und erst zuletzt zu Quaderflächen schiefwinklige Flächen angeformt werden. Dies ermöglicht höchst exakte Positionierungs- und Oberflächenbearbeitungsschritte, indem bis zuletzt an den eingesetzten Körpern nur Parallelflächen vorhanden sind.

Das erfindungsgemässe Bauelement wird bevorzugterweise als X-Cube eingesetzt bzw. das erfindungsgemässe Verfahren zur Herstellung eines solchen X-Cubes. Im weiteren wird eine optische Projektionsanordnung mit mindestens einem als X-Cube ausgebildeten erfindungsgemässen Bauelement vorgeschlagen, welches aufgrund der erfindungsgemäss geringen optischen Störungen, insbesondere im empfindlichen Zentrumsbereich gemäss 9 von Fig. 1, optisch ausgezeichnete Eigenschaften aufweist, wobei insbesondere eine CCD-Kamera vorgeschlagen wird mit einem solchen X-Cube für die Farbenaufteilung. Bei einem solchen optischen Gerät sollte die Grösse gestörter Zonen kleiner sein als eine Pixelgrösse, die heutzutage in der Grössenordnung von 4 μm liegt.

Eine optische Projektionsanordnung mit mindestens einem als X-Cube ausgebildeten erfindungsgemässen Bauelement weist insbesondere im anhand von Fig. 2 erläuterten Zentrumsbereich 9 eine wesentliche Reduktion der optischen Fehler auf und ist dank des vorgeschlagenen Verfahrens wesentlich kostengünstiger und präziser herstellbar.

Die Erfindung wird anschliessend anhand von Figuren weiter erläutert. Diese zeigen:

Fig. 1            in Aufsicht ein X-Cube bekannter Art zur Erläuterung seiner Wirkungsweise;

Fig. 2            an einem vorbekannten X-Cube gemäss Fig. 1 den zentralen Stossstellenbereich der optisch wirksamen Schichtsysteme;

Fig. 3            perspektifisch ein bei Durchführung des erfindungsgemässen Verfahrens realisiertes Zwischenprodukt, an sich bereits ein erfindungsgemässes optisches Bauelement;

Fig. 4a bis 4h      Verfahrenszwischenprodukte, wie sie bei Durchführung der erfindungsgemässen Verfahren realisiert werden, wobei die Strukturen gemäss Fig. 4f, g und h bereits erfindungsgemässe optische Bauelemente darstellen;

Fig. 5            den Schichtsystem-Stossbereich in vergrösserter Darstellung am erfindungsgemässen Verfahrenszwischenprodukt gemäss Fig. 4f;

Fig. 6 und Fig. 7     verallgemeinerte, erfindungsgemässe optische Bauelement-Strukturen mit ihren Schichtsystem-Stossbereichen;

Fig. 8            ausgehend von der Darstellung nach Fig. 5 eine Weiterentwicklung des dort gezeigten, erfindungsgemässen optischen Bauelementes bzw. seines Stossbereiches;

Fig. 9            ausgehend von anhand seines Stossbereiches in Fig. 5 dargestellten, erfindungsgemässen Bauelementes eine weitere Weiterentwicklung;

Fig. 10          die Ausbildung des zentralen Stossbereiches an einem erfindungsgemäss optischen Bauelement, insbesondere nach dem erfindungsgemässen Verfahren hergestellt, im Vergleich mit dem anhand von Fig. 2 dargestellten, vorbekannten Stossbereich an vorbekannten optischen Bauelementen der X-Cube-Gattung;

Fig. 11 eine schematische Darstellung eines verallgemeinerten, mit der vorliegenden Erfindung realisierbaren und an sich erfinderischen optischen Bauelementes.

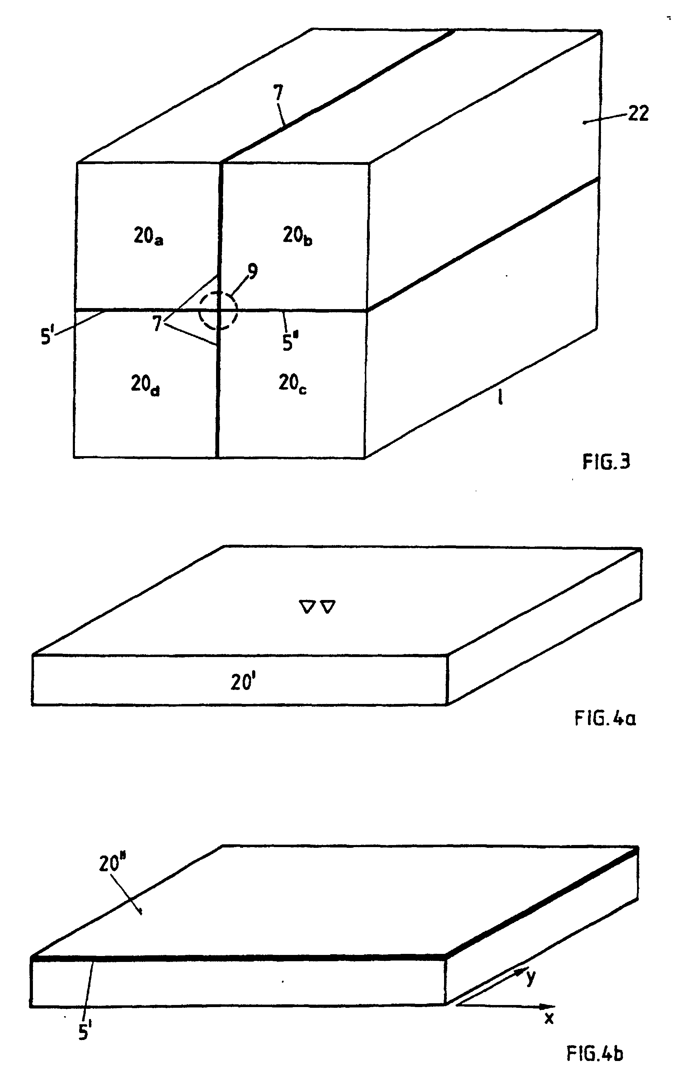

In Fig. 3 ist bezüglich Herstellung eines erfindungsgemässen X-Cubes ein bereits an sich erfindungsgemässes Zwischenprodukt dargestellt; es ist ein quaderförmiges Gebilde aus vier Teilquadern 20a bis 20d. Zwischen den Teilquaderpaaren 20a und 20d einerseits, 20b und 20c anderseits liegt ein erstes, optisch wirksames Schichtsystem - für die X-Cube-Fertigung und in Analogie zu Fig. 1 das Schichtsystem 7 - während zwischen den Kubuspaaren 20a und 20b bzw. 20d, 20c ein weiteres optisch wirksames Schichtsystem - nämlich bei der X-Cube-Fertigung und mit Blick auf Fig. 1 das Schichtsystem 5 mit Teilen 5' und 5'' - liegt. Für die Fertigung von X-Cubes beträgt die Länge 1 des Quaders 22 1 bis 8 oder mehr, insbesondere aber 4 X-Cube-Längen, in Fig. 1 gemessen senkrecht zur Figurenebene. Grundsätzlich zeichnet sich dieses Gebilde, dessen Herstellung nachfolgend erläutert werden wird, durch folgendes aus:

- Alle vorkommenden Winkel betragen 90°, wodurch die Teilkörper 20 an sich und das Zwischenprodukt 22 äusserst gut herstellbar sind. Dies, weil u.a. sich jeweils gegenüberliegende Seiten simultan bearbeitbar sind, wie beispielsweise durch Doppelläppen bzw. Doppelpolieren. Dadurch wird die Planität insbesondere der aneinanderliegenden Quaderflächen so gut, dass bei interferometrischer Untersuchung höchstens 20, vorzugsweise höchstens 10, gar vorzugsweise höchstens 5 Interferenzringe auftreten.

- Bei simultaner doppelseitiger Bearbeitung sind auch sehr hohe Parallelitäten der jeweils sich gegenüberliegenden Flächen erzielbar, vorzugsweise mit Abweichungen $\leq 2\,\mu m$ auf 150 mm Länge. Ausserdem wird eine hohe Planität jeder Fläche erreicht, beispielsweise mit Planitätsabweichungen $\leq 1\,\mu m$ auf Längen von 150 mm.

- Weil alle beteiligten Winkel 90° ($\pm$ Toleranzen) betragen, ist jeder der Teile 20a bis 20d und 22 gut halt- und positionierbar. Bei Doppelläppen bzw. Doppelpolieren entfällt überhaupt eine aufwendige Halterung, und der entsprechende Teil kann einfach in einen Poliereinsatz eingelegt werden. Die Halterung der Teile, wie durch Ansprengen, Gipsen oder Kitten, kann vorteilhafterweise entfallen.

- Alle beteiligten Winkel sind mit grosser Präzision herstellbar, weil es ausnahmslos 90°-Winkel sind und nicht beispielsweise wesentlich schwieriger herzustellende Winkel von 45°. Die Winkeltoleranzen sind insbesondere für die 90°-Zentralwinkel der Teilkörper 20 vorzugsweise höchstens $\pm$ 60 Winkelsekunden, vorzugsweise gar höchsten $\pm$ 20 Winkelsekunden.

- Der Messaufwand, um die dargestellten Teile geometrisch zu vermessen, kann sehr klein gehalten werden, wie durch Einsatz eines Interferometers.

- Insbesondere beim Einsatz planparalleler, zu verkittender komplementärer Flächen ist das Verkitten sehr einfach, und es können Kittfugen präzis definierter Dicke erzeugt werden, vorzugsweise mit einer Dicke von höchstens 10 $\mu m$, vorzugsweise gar von höchstens 3 $\mu m$.

- Die Herstellung derartiger Teile ist leicht skalierbar, d.h. man kann durch Verwendung verschieden grosser Platten mehrere der als T-Cubes bezeichneten Teile 22 am Stück herstellen, die man anschliessend vereinzelt, vorzugsweise durch Zersägen.

- Das optische Messen an beschichteten Flächen von Quaderkörpern mit planparellen Flächen ist wesentlich einfacher als bei Dreiecksprismen.

Im folgenden soll anhand der Figuren 4a bis 4c, Schritt für Schritt, erläutert werden, wie der an sich bereits erfinderische Körper 22 nach Fig. 3 erfindungsgemäss hergestellt wird. Dabei wird auch offensichtlich werden, dass die bezüglich Stand der Technik und Fig. 2 diskutierten Nachteile im Zentralbereich 9, was Schichtführung und Kantenpräzision anbelangt, tatsächlich wegfallen.

In Fig. 4a ist eine Rohlingsplatte 20' dargestellt. Ihre Dimension liegt bevorzugterweise im Bereich

(100 - 200 mm) x (100 - 200mm) x (3 - 40 mm),

typischerweise im Bereich

190 mm x 178 mm x 3 mm

oder

190 mm x 178 mm x 40 mm.

Durch Doppelläppen werden sich gegenüberliegende Flächen gemäss Fig. 4b bearbeitet, insbesondere die Flächen ▽▽.

Daraufhin wird gemäss Fig. 4b die eine der Flächen ▽▽ der Platte 20' mit einem Schichtsystem 5' beschichtet, es resultiert die Platte 20''.

Handelt es sich bei der hier diskutierten Fertigung um die Fertigung von X-Cubes, dann wird bevorzugterweise und wie in Fig. 4b eingetragen das Blaureflektorschichtsystem 5' aufgebracht, und zwar, weil das Blaubild unschärfer sein darf als das Rotbild aufgrund entsprechender Empfindlichkeiten des menschlichen Auges.

An dieser Stelle muss darauf hingewiesen werden, dass die Platte 20' sowohl in y-Ausrichtung wie auch in x-Ausrichtung der Dimension eines oder mehrerer Bauelemente, vorzugsweise vier entspricht, Vereinzelung in beiden Dimensionen kann und wird nachmals erfolgen.

Gemäss Fig. 4c werden nun grundsätzlich eine Platte 20' und eine Platte 20'' so miteinander verbunden, vorzugsweise verkittet, dass zwischen ihnen das erwähnte Schichtsystem, im Spezialfall vorzugsweise das Blaureflektorschichtsystem 5', eingebettet ist.

Ob dabei nur die Fläche der einen der beteiligten Platten 20'' beschichtet ist oder beide und, entsprechend, die Kittschicht zwischen der Oberfläche einer der Platten 20' und der Beschichtung oder zwischen zwei Beschichtungen liegt, kommt auf den jeweiligen Einsatzzweck an. Bevorzugt wird insbesondere bei der X-Cube-Fertigung das Beschichten einer der beteiligten komplementären Oberflächen und Verkitten dieser Oberfläche mit der Komplementärfläche der unbeschichteten Platte 20'.

Es wird von komplementären Flächen deshalb gesprochen, weil, wie später noch ausgeführt wird, für andere Einsatzzwecke die Körper mit beliebig gekrümmten Flächen aufeinandergelegt werden können mit dazwischenliegendem Schichtsystem, vorausgesetzt, die beteiligten Flächen sind in geforderter Genauigkeit komplementär passend.

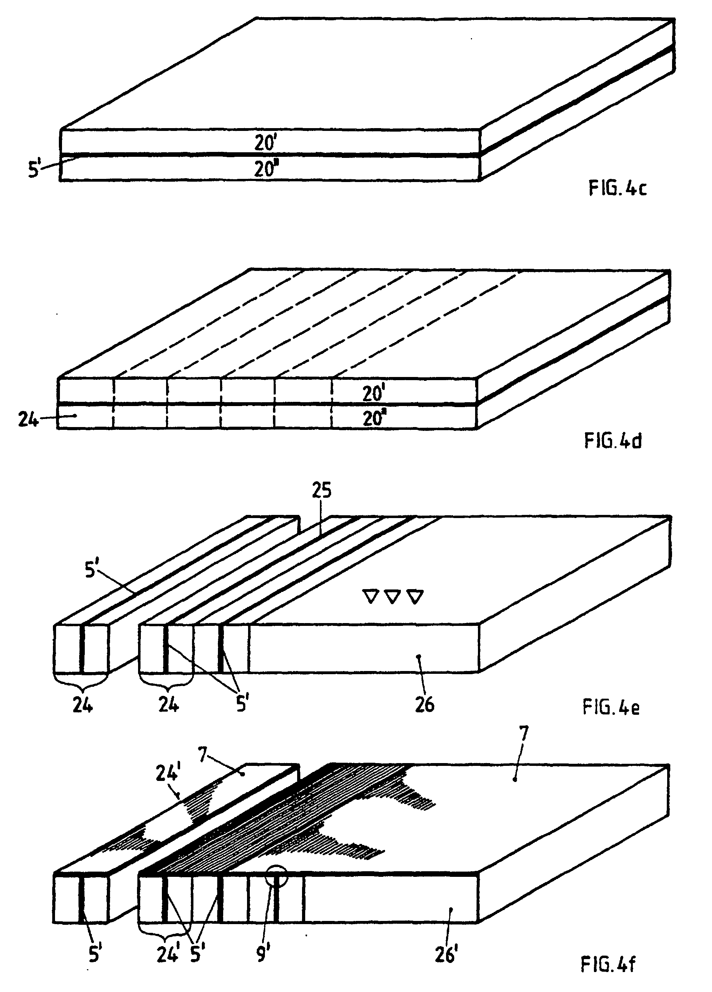

Gemäss Fig. 4d werden nun die Doppelplatten 20', 20'' gemäss Fig. 4c durch Sägen vereinzelt, in Balken 24.

Gemäss Fig. 4e werden nun die gesägten Balken 24 um 90° gekippt und bevorzugterweise zwei und mehr derartiger Balken exakt nebeneinandergelegt, 26, oder es wird, wie links in den folgenden Figuren dargestellt, ein einzelner Balken 24 weiterbehandelt.

Die Balken müssen zur Bildung der Platte 26 so ausgerichtet sein, dass beim nächsten Bearbeitungsschritt das zweite Schichtsystem, im Fall der X-Cube-Herstellung das Rotreflektor-Schichtsystem 7, genau senkrecht auf die bearbeiteten Flächen abgelegt wird. Dies wird dadurch äusserst erleichtert, dass alle Flächen des oder der Balken 24 senkrecht und praktisch planparallel zueinander stehen bzw. verlaufen und äusserst eben ist bzw. sind. Zum Beispiel kann man, wie bei 25 angedeutet, bevorzugterweise mehrere Balken 24 gegeneinander ansprengen, um einen eventuellen Winkelfehler beim Sägen zu kompensieren. Es können aber auch, wie erwähnt und links dargestellt, einzelne der Balken 24 geläppt bzw. poliert werden, wenn der Sägeschritt hinreichend genau ist.

Es werden nun, wie mit ▽▽▽ dargestellt, die sich gegenüberliegenden Seitenflächen der Platte 26 bzw. des Einzelbalkens 24 doppelgeläppt bzw. doppelpoliert, und zwar mit den Stossbereichen der Schichtsysteme 5'.

Gemäss Fig. 4f wird nun weiter eine der eben polierten Oberflächen der Platte 26 bzw. des Einzelbalkens 24 im ersten Fall für alle beteiligten Balken 24 gemeinsam gegebenenfalls noch einmal überpoliert und anschliessend durchgehend beschichtet. Bei der X-Cube-Herstellung wird an dieser Stelle und wie in Fig. 4f auch eingetragen, das Rotreflektor-Schichtsystem 7 aufgebracht.

Damit wird das erste Schichtsystem 5' und die Verkittung nach Überpolierung grossflächig überschichtet mit 7. Bevorzugterweise wird hierzu ein relativ kalter Beschichtungsprozess eingesetzt, vorzugsweise ein plasma- und/oder ionengestütztes Beschichtungsverfahre, vorzugsweise ein genügend kaltes PVD-Verfahren, vorzugsweise Sputtern, oder PECVD-Verfahren, insbesondere aber ein Kaltbeschichtungsverfahren mit Substrattemperaturen von höchstens 150°C, vorzugsweise von höchstens 80°C. Die bevorzugt eingesetzte SchichtsystemStruktur, die bevorzugten Schichtmaterialien, die bevorzugte Packungsdichte der Schichten wurden eingangs erläutert.

Die Struktur gemäss Fig. 4f und die bis anhin vorgeschlagene Verfahrensweise sind an sich erfinderisch, und zwar unabhängig davon, ob die mit 5' und 7 dargestellten Schichtsysteme rechtwinklig zueinander stehen oder schiefwinklig und ob die beschichteten Flächen plan oder, wie oben erwähnt, komplementär gekrümmt sind. Es werden Stossstellen 9' geschaffen, an denen das eine Schichtsystem - 7 - kontinuierlich den Stoss des zweiten - 5' - überdeckt, wobei die mit dem System 7 überdeckte Fläche einheitlich mechanisch oberflächenbearbeitet ist.

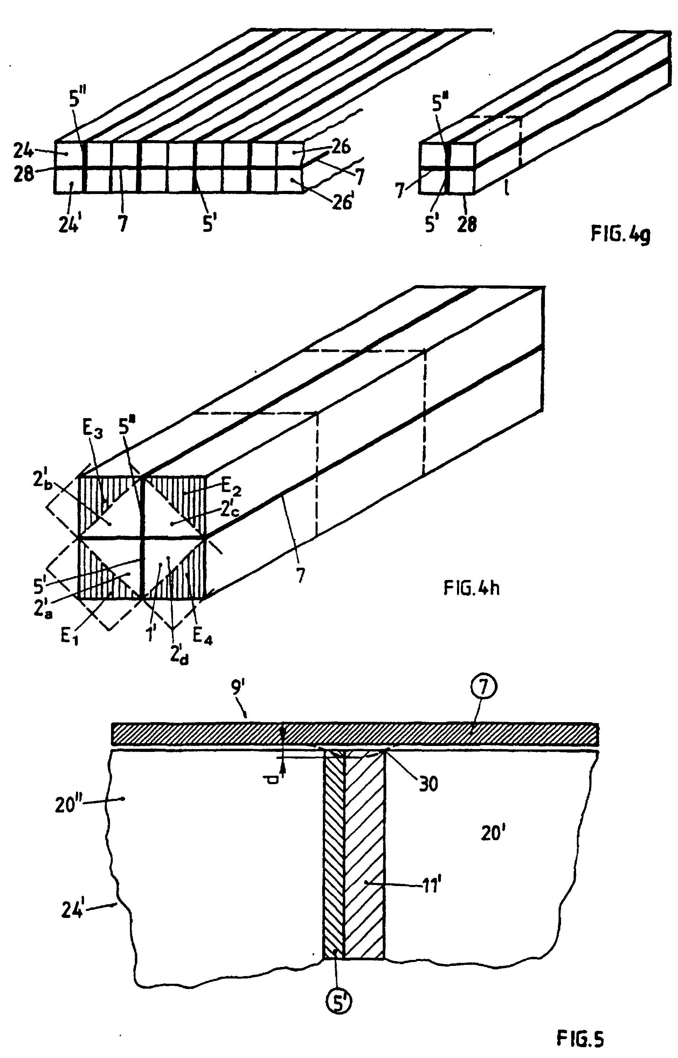

Nun werden, gemäss Fig. 4g, eine unbeschichtete Platte 26 oder ein unbeschichteter Einzelbalken 24 gemäss Fig. 4e, gegebenenfalls nach Absprengen, und eine beschichtete Platte 26' bzw. ein beschichteter Einzelbalken 24' nach Fig. 4f aufeinandergelegt und verkittet. Aus dem Schichtsystem 5' der unbeschichteten Platte 26 bzw. des unbeschichteten Balkens 24, als drittes aufgebrachtes Schichtsystem, nebst den beiden 7 und 5' an der beschichteten Platte 26' bzw. dem beschichteten Balken 24', wird nun Schichtsystem 5''.

Die resultierenden T-Cube-Streifen 28 werden gegebenenfalls entsprechend den vorzusehenden Längen 1 vereinzelt. Bevorzugterweise werden aber vor diesem Vereinzeln für die Herstellung der X-Cubes die T-Cubes 28 gemäss Fig. 4h, z.B. durch Sägen und Bearbeiten ihrer Oberflächen entlang den Ebenen E abgeschrägt, vorzugsweise wiederum doppelseitig, wie mit $E_1$, $E_2$ bzw. $E_3$, $E_4$ dargestellt. Damit entstehen gegebenenfalls nach Ablängen in Richtung 1 sehr genaue erfindungsgemässe X-Cubes 1'. Die 45°-Winkeltoleranzen sind dabei höchstens ± 2 Winkelminuten, sind vorzugsweise höchstens ± 1 Winkelminute.

Gegebenenfalls werden die abgeschrägten Flächen entsprechend den Ebenen E in Fig. 4h mit einem Antireflexschichtsystem versehen und, sofern dies vorgenommen wird, werden die X-Cubes erst darnach vereinzelt.

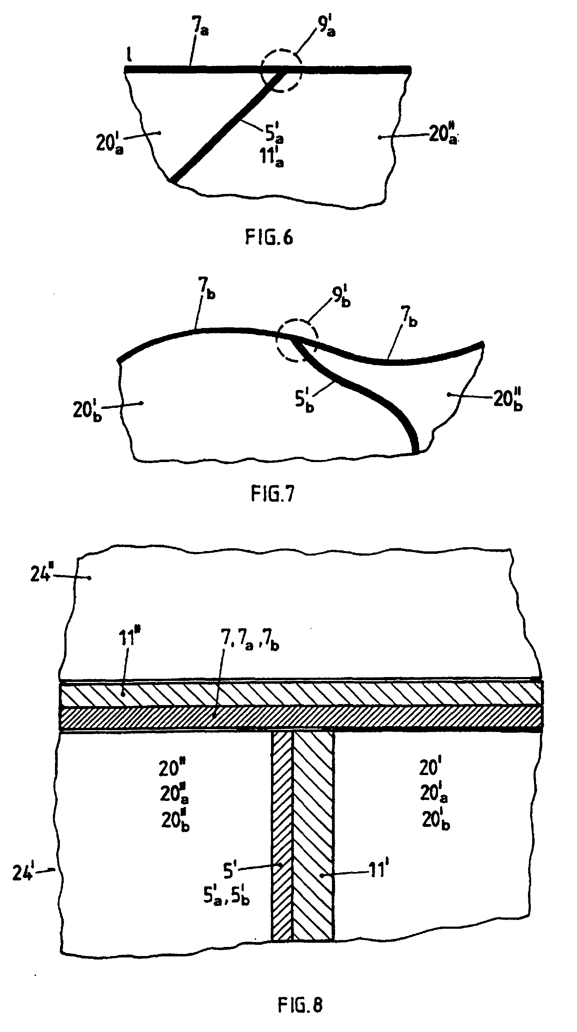

Rückblickend auf Fig. 4f ist in Fig. 5 ein Ausschnitt 9' eines an sich erfinderischen strahlenoptischen Bauteils 1 dargestellt, und zwar wie er bei der Herstellung von X-Cubes auftritt. Bei letzterer liegen zwischen planparallelen Flächen der zwei zertrennten Körper 20', 20'' (Fig. 4e, 4d) aus Glas oder einem Kunststoff, wie vorzugsweise aus BK7-Glas oder Polycarbonat oder PMMA, ein erstes optisches Schichtsystem, entsprechend 5', bei der X-Cube-Fertigung dem Blaureflektor-Schichtsystem. Die beiden Körper 20', 20'' sind bei 11' verkittet. Nach gemeinsamer Oberflächenbearbeitung durch Polieren oder Läppen ist auf beiden Körpern 20', 20'' gemeinsam, das Schichtsystem 5' mit der Kittschicht 11' überdeckend, das zweite optische Schichtsystem entsprechend 7, im Falle eines X-Cubes das Rotreflektorschichtsystem, aufgebracht. Wie im Vergleich mit Fig. 2 ersichtlich, entfällt die Zweiteiligkeit von 7 in 7' und 7'' erfindungsgemäss.

Durch die gemeinsame mechanische Oberflächenbearbeitung entsteht im Stossbereich, wie bei 30 in Fig. 5 eingetragen, nur eine leichte Einwölbung der Kittschicht 11' bzw. des Schichtsystems 7, welche eine Maximaltiefe d bezüglich der planen Fläche der Beschichtung 7 von höchstens 5 um, vorzugsweise von höchstens 2 µm aufweist.

In Fig. 6 ist, nun verallgemeinernd, ein wie dasjenige gemäss Fig. 5 erfinderisches optisches Bauelement dargestellt, bei welchem das zweite Schichtsystem 5'a schiefwinklig an das plane Schichtsystem 7a stösst.

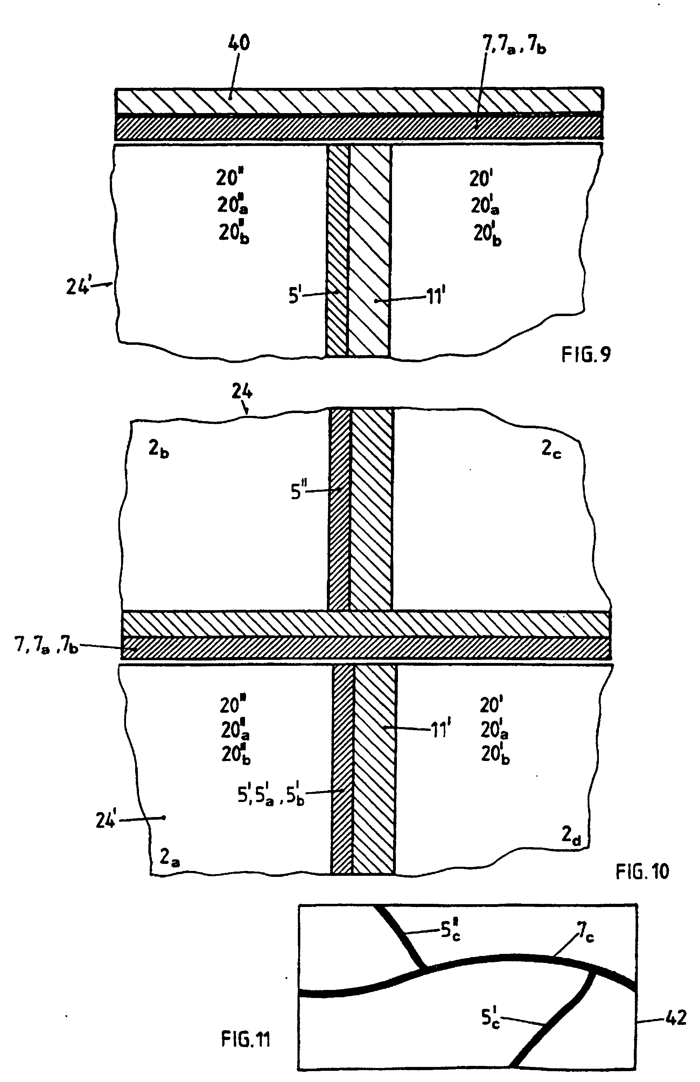

In Fig. 7 sind die komplementären Flächen der Körper 20'b, 20''b gekrümmte Flächen, ebenso die mit dem Schichtsystem 7b beschichtete, gemeinsame Oberfläche. In äusserst definierter Art und Weise stossen die Schichten 5' und 7 aneinander, gemäss Fig. 5, für die X-Cube-Fertigung, insbesondere rechtwinklig. Das eine Schichtsystem - 7 - verläuft dabei ununterbrochen gleichmässig, insbesondere auch über die Stossstelle. Dies ist insbesondere in allen Anwendungen wesentlich, wo sich die Stossstellenbereiche beispielsweise entsprechend 9'b von Fig. 7 oder 9'a bzw. 9' bei der X-Cube-Fertigung, auf den Strahlengang der von den Schichtsystemen beeinflussten Strahlung, insbesondere optischen Strahlung, auswirken. Der Fachmann erkennt nun ohne weiteres, insbesondere im Zusammenhang mit Fig. 4, wie, analog, optische Bauteile auch gemäss den Fig. 6 und 7 hergestellt werden können, optische Bauteile, die nach heutigem Wissensstand noch kaum realisiert wurden. Es ergeben sich damit völlig neuartige Bauteilstrukturen. Dies für optische Strahlen im sichtbaren wie auch im nichtsichtbaren Spektralbereich, wie im UV- oder IR-Bereich.

In Fig. 8 ist die Struktur eines weiteren, an sich erfindungsgemässen Bauteils dargestellt, bei welchem, ausgehend von demjenigen von Fig. 5 und analog von Fig. 6 und 7, das durchgehende Schichtsystem 7 bzw. 7a bzw. 7b abgedeckt ist mit einem weiteren Körper 24'' und mittels einer Kittschicht 11''.

In Fig. 9 ist der Stossbereich am an sich erfindungsgemässen Bauteil z.B. gemäss Fig. 5 dargestellt, bei dessen Weiterbildung das Schichtsystem 7 bzw. mit Blick auf die Figuren 6 oder 7, 7a bzw. 7b zusätzlich beschichtet, wie beispielsweise schutzbeschichtet ist mit einem Schichtsystem 40.

Schliesslich ist in Fig. 10 der bei Erstellung einer Struktur nach Fig. 3, also insbesondere eines X-Cubes, durch das erfindungsgemässe Vorgehen resultierende Stossbereich dargestellt, wobei das durchgehende Schichtsystem 7 bevorzugterweise durch das Rotreflektor-Schichtsystem gebildet ist. Ein analoges Bauteil mit den mit 'a' bzw. 'b' indizierten Bezugzeichen ergibt sich ausgehend von den Figuren 6 bzw. 7.

In Fig. 11 ist ein solches verallgemeintes, erfindungsgemässes optisches Bauteil 42 dargestellt; der Fachmann erkennt ohne weiteres die Vielzahl von Möglichkeiten, welche durch die vorliegende Erfindung eröffnet werden.

Insbesondere bei der X-Cube-Fertigung mit 90°-Rohlingen wird durch die präzise Bearbeitbarkeit sich gegenüberliegender Flächen, der Verkittung der Rohlinge, dem gemeinsamen Beschichten und Oberflächenbearbeitung und, vorzugsweise, dem Vereinzeln erst ganz am Schluss in die einzelnen optischen Bauelemente, eine ganz wesentliche Verbilligung des Fertigungsprozesses erreicht. Dieser ergibt zudem Bauteile mit wesentlich weniger optisch wirksamen Fehlerstellen, bedenkt man, dass beim vorgeschlagenen Verfahren die heiklen, zentral gelegenen 90°-Kanten nie freiliegen.

Als optisch wirksame Schichtsysteme werden insbesondere bei der X-Cube-Fertigung vorzugsweise dielektrische Schichtsysteme eingesetzt mit mindestens einer dielektrischen Schicht. Als Beschichtungsverfahren werden insbesondere die oben erwähnten, genügend kalten Verfahren eingesetzt. Selbstverständlich können Bauteile gefertigt werden, die in anderen Spektralbereichen als im sichtbaren wirksam sind, beispielsweise im UV- oder IR-Bereich, und es können nebst Farbteiler-Schichtsystemen Reflektorschichtsysteme, Antireflex-Schichtsysteme oder Polarisator-Schichtsysteme eingesetzt bzw. eingebaut werden. Es ergeben sich insbesondere X-Cubes für den Einsatz in Projektionssystemen, wo präzise und zudem kostengünstige optische Bauteile erforderlich sind.

Bevorzugte Ausführungen:

Erfindungsgemäss wurden X-Cubes realisiert, bei denen, beispielsweise mit Blick auf Fig. 3 und insbesondere im Zentralbereich 9, die Schichtsysteme 7, 5', 5'' unter 90° aneinanderstossen, mit einer Winkelabweichung von höchstens 20 Winkelsekunden. Der Versatz der Stossstellen der Schichtsysteme 5' bzw. 5'' ist dabei höchstens 2 µm.

Die Überprüfung der Planarität, insbesondere der aneinanderstossenden Flächen mittels Interferometer ergibt höchstens 20 Interferenzringe, dabei bevorzugt 10 oder gar bevorzugt höchstens 5 Interferenzringe.

Es wird zur Verkittung der Teilkörper ein optischer Kitt, vorzugsweise ein UV-härtbarer Kitt, wie z.B. Delo-Photobond 4302-1, eingesetzt. Die Dicke der Kittschichten beträgt höchstens 10 µm, typischerweise bevorzugt höchstens 3 µm.

Die Schichtsysteme werden dabei als eine Abfolge von optisch hoch- und niedrigbrechenden Schichten abgelegt, wobei die hochbrechenden Schichten mindestens überwiegend aus einem Oxid oder Oxinitrid, dabei vorzugsweise aus mindestens einem der Materialien $TiO_2$, $Ta_2O_5$, $Nb_2O_5$, $HfO_2$, $ZrO_2$, $SiO_xN_y$ bestehen.

Für die niederbrechenden Schichten wird bevorzugterweise ein Material eingesetzt, das mindestens überwiegend aus einem Oxid oder Oxinitrid, vorzugsweise aus mindestens einem der Materialien $SiO_2$, $Al_2O_3$, $SiO_xN_y$ besteht.

Die Packungsdichte der Schichten ist mindestens 0,95, dabei bevorzugterweise mindestens 0,97, was insbesondere durch Sputtern oder ionenunterstütztes Beschichten erzielt wird. Die spektrale Temperaturshift der Schichten an Luft, bei Wechsel der Umgebungstemperatur von 20°C auf 100°C, ist höchstens 5 nm, dabei bevorzugterweise höchstens 2 nm.

Die aufgebrachten Schichtsysteme sind mechanisch stabil und erfüllen die Norm MIL-M-13508C (L-T-90 D bzw. A-A113B) sowie, bezüglich mechanischer und chemischer Stabilität, die Norm MIL-C-675B/C.

Die Schichten werden bevorzugterweise durch plasma- und/oder ionengestütztes Beschichten abgelegt, dabei bevorzugterweise durch ein genügend kaltes PVD- oder PECVD-Verfahren, dabei insbesondere bevorzugt durch Kaltbeschichtungsverfahren, bei denen Substrattemperaturen von höchstens 150°C, bevorzugterweise gar von höchstens 90°C, eingehalten werden.

**Patentansprüche**

**1.** Optisches Bauelement, umfassend:

- einen Grundkörper (20', 20''),

- ein erstes optisch wirksames Schichtsystem (7), welches mit mindestens der einen Schichtsystemfläche an einer Fläche (▽▽▽) des Grundkörpers (20', 20'') liegt,

- ein zweites optisch wirksames Schichtsystem (5'), das im Grundkörper (20', 20'') eingebettet ist und in einem Stossbereich mit einer der Dickenausdehnung des zweiten Schichtsystems entsprechenden Breitfläche an der Fläche (▽▽▽) des Grundkörpers mündet,

welches Bauelement für den optischen Einsatz mittels der Schichtsysteme und des Stossbereiches geeignet ist, **dadurch gekennzeichnet, dass** die Fläche (▽▽▽) des Grundkörpers und die Breitfläche des zweiten Schichtsystems (5) gleichzeitig durchgehend gleich mechanisch oberflächenbearbeitet sind.

**2.** Bauelement nach Anspruch 1, **dadurch gekennzeichnet, dass** das erste Schichtsystem (7) im Stossbereich (30) in Richtung gegen das zweite Schichtsystem hin mit einer Einbuchtungstiefe von höchstens 5 µm, vorzugsweise von höchstens 2 µm, eingebuchtet ist.

3. Bauelement nach Anspruch 1 oder 2, **dadurch gekennzeichnet, dass** mindestens eines, vorzugsweise beide Schichtsysteme (7, 5') eine Abfolge optisch hoch- und niederbrechender Schichten umfasst, wobei die hochbrechenden Schichten vorzugsweise überwiegend aus einem Oxid oder Oxinitrid bestehen, vorzugsweise aus mindestens einem der Materialien

$TiO_2$, $Ta_2O_5$, $Nb_2O_5$, $HfO_2$, $ZrO_2$, $SiO_xN_y$,

dass weiter die niederbrechenden Schichten bevorzugterweise überwiegend aus einem Oxid oder Oxinitrid bestehen, vorzugsweise aus mindestens einem der Materialien

$SiO_2$, $Al_2O_3$, $SiO_xN_y$.

4. Bauelement nach einem der Ansprüche 1 bis 3, **dadurch gekennzeichnet, dass** die Packungsdichte der Schichtsystemschichten mindestens 0,95, vorzugsweise mindestens 0,97 ist.

5. Bauelement nach einem der Ansprüche 1 bis 4, **dadurch gekennzeichnet, dass** die Schichtsysteme zwischen 20°C und 100°C eine spektrale Verschiebung ihrer Spektraleigenschaften von höchstens 5 nm, vorzugsweise von höchstens 2 nm aufweisen.

6. Optisches Bauelement nach einem der Ansprüche 1 bis 5, **dadurch gekennzeichnet, dass**

- die Schichtsysteme eine Abfolge von optisch hoch- und niederbrechenden Schichten umfassen,

- die hochbrechenden Schichten mindestens überwiegend aus einem Oxid oder Oxinitrid, vorzugsweise aus mindestens einem der Materialien $TiO_2$, $Ta_2O_5$, $Nb_2O_5$, $HfO_2$, $ZrO_2$, $SiO_xN_y$ bestehen,

- die niederbrechenden Schichten mindestens überwiegend aus einem Oxid oder Oxinitrid, vorzugsweise aus mindestens einem der Materialien $SiO_2$, $Al_2O_3$, $SiO_xN_y$ bestehen

- die Packungsdichte der Schichten mindestens 0,95 beträgt

- die Schichtsysteme bei Umgebungstemperaturen zwischen 20°C und 100°C eine Verschiebung ihrer Spektraleigenschaften von höchstens 5 nm aufweisen.

7. Bauelement nach einem der Ansprüche 1 bis 6, **dadurch gekennzeichnet, dass** der Grundkörper aus mindestens zwei entlang einem der Schichtsysteme verkitteten Teilen (20', 20'') besteht und die Dicke der Kittschicht höchstens 10 μm, vorzugsweise höchstens 3 μm beträgt.

8. Bauelement nach einem der Ansprüche 1 bis 7, **dadurch gekennzeichnet, dass** das erste Schichtsystem (7) mindestens in einem Bereich, innerhalb des Grundkörpers (20'', 20', 24'') eingebettet ist.

9. Bauelement nach Anspruch 8, **dadurch gekennzeichnet, dass** ein drittes Schichtsystem (5'') vorgesehen ist, welches gewinkelt an die zweite Fläche des ersten Schichtsystems (7) stösst, wobei weiter bevorzugterweise:

- das zweite (5') und das dritte (5'') Schichtsystem mit ihren Breitflächen sich gegenüberliegen, vorzugsweise mit einem Versatz von höchstens 2 μm und/oder

- unter im wesentlichen gleichen Winkeln zur Grundkörperfläche in den Stossbereichen ausmünden, vorzugsweise unter nicht mehr als 20-Winkel-Sekunden abweichenden Winkeln.

10. Bauelement nach einem der Ansprüche 1 bis 9, **dadurch gekennzeichnet, dass** mindestens zwei der Schichtsystemgetrennten Körper (20', 20'', 24'') aus Materialien mit denselben optischen Eigenschaften bestehen.

11. Bauelement nach einem der Ansprüche 1 bis 10, **dadurch gekennzeichnet, dass** die zwischen sich die Schichtsysteme aufnehmenden Grundkörperteile (20', 20'', 24'') durch Ansprengen verbunden sind.

12. Bauelement nach einem der Ansprüche 1 bis 11, **dadurch gekennzeichnet, dass** die zwischen sich jeweils eines der Schichtsysteme (5', 5'', 7) aufnehmenden Grundkörperteile (20', 20'', 24) aus Glas und/oder einem Kunststoff, dabei vorzugsweise aus BK7-Glas, Polycarbonat oder PMMA bestehen.

13. Bauelement nach einem der Ansprüche 1 bis 12, **dadurch gekennzeichnet, dass** die Schichtsysteme (5', 5'', 7) im sichtbaren Lichtbereich wirksam sind.

14. Bauelement nach Anspruch 13, **dadurch gekennzeichnet, dass** mindestens eines der zwischen sich die Schichtsysteme (5', 5'', 7) aufnehmenden Grundkörperteile (20', 20'', 24'') im sichtbaren Lichtbereich transparent ist.

15. Bauelement nach einem der Ansprüche 8 bis 14, **dadurch gekennzeichnet, dass** das erste Schichtsystem (7) plan ist, die Breitflächen des zweiten (5') und dritten (5'') einander gegenüberliegen, vorzugsweise mit einem Versatz von höchstens 2 µm, und dass weiter vorzugsweise erstes (7), zweites (5') und drittes (5'') Schichtsystem in Diagonalflächen eines als Quader geformten Grundkörpers (1') liegen.

16. Bauelement nach Anspruch 15, **dadurch gekennzeichnet, dass** es ein X-Cube ist und vorzugsweise das erste Schichtsystem (7) selektiv Licht im sichtbaren ROT-Bereich im wesentlichen reflektiert, hingegen im sichtbaren BLAU- und GRÜN-Bereich mindestens weitgehend transmittiert und weiter vorzugsweise das zweite (5') und dritte (5'') Schichtsystem Licht im sichtbaren BLAU-Bereich mindestens weitgehend reflektieren und entsprechend Licht im GRÜN- bzw. ROT-Bereich mindestens weitgehend transmittieren.

17. Bauelement nach einem der Ansprüche 1 bis 16, **dadurch gekennzeichnet, dass** mindestens eines der Schichtsysteme mindestens eine dielektrische Schicht aufweist und vorzugsweise ein Polarisatorschichtsystem oder ein Farbfilterschichtsystem oder ein Antireflexschichtsystem bildet, dabei weiter vorzugsweise ein Rot- oder Blaureflektorsystem für S-polarisiertes Licht mit 45° Einfallswinkel.

18. Verfahren zur Herstellung eines Bauelementes nach mindestens einem der Ansprüche 1 bis 17, **dadurch gekennzeichnet, dass** man:

    - an mindestens zwei Teilkörpern (20', 20'') je eine Oberfläche erstellt, welche zueinander komplementär sind,

    - mindestens eine dieser komplementären Oberflächen (20'') mit einem optisch wirksamen Schichtsystem (5') versieht

    - die Teilkörper (20', 20'') entlang der genannten komplementären Oberflächen mit dazwischenliegendem Schichtsystem (5') miteinander verbindet und so einen zusammengesetzten Teilkörper (24) bildet,

    - am zusammengesetzten Teilkörper (24) eine durchgehende Oberfläche mechanisch oberflächenbearbeitet, welche gewinkelt ist zu den komplementären Oberflächen und woran diese in einem Stossbereich stossen,

    - entlang dieser durchgehenden Oberflächen ein weiteres optisch wirksames Schichtsystem (7) vorsieht (24').

19. Verfahren nach Anspruch 18, **dadurch gekennzeichnet, dass** man die durchgehende Oberfläche durch Fräsen und/oder Schleifen und/oder Läppen und/oder Polieren bearbeitet, vorzugsweise mit einer Planität, die höchstens 20 Interferenzringe, vorzugsweise höchstens 10, besonders bevorzugt höchstens 5 Interferenzringe, bei der Überprüfung mittels Interferometer ergibt.

20. Verfahren nach Anspruch 18 oder 19, **dadurch gekennzeichnet, dass** man die komplementären Oberflächen durch Läppen und/oder Polieren, vorzugsweise durch Doppelläppen und/oder Doppelpolieren erstellt, vorzugsweise mit einer Planität, die höchstens 20 Interferenzringe, vorzugsweise höchstens 10, besonders bevorzugt höchstens 5 Interferenzringe, bei der Überprüfung mittels Interferometer ergibt.

21. Verfahren nach einem der Ansprüche 18 bis 20, **dadurch gekennzeichnet, dass** man die Teilkörper durch Verkitten verbindet mittels eines optischen Kitts, vorzugsweise mittels eines UV-härtenden Kittes, vorzugsweise mit einer Kittschicht-Dicke von höchstens 10 µm, vorzugsweise von höchstens 3 µm.

22. Verfahren nach Anspruch 21, **dadurch gekennzeichnet, dass** man die mechanische Oberflächen-Bearbeitung so vornimmt, dass dadurch eine Einbuchtung im Stossbereich von höchstens 5 µm, vorzugsweise von höchstens 2 µm entsteht.

23. Verfahren nach einem der Ansprüche 18 bis 22, **dadurch gekennzeichnet, dass** man den zusammengesetzten Teilkörper durch Zertrennen, vorzugsweise durch Sägen, in weitere Teilkörper (24) zerteilt und dadurch jeweils zwei weitere Oberflächen schafft, welche gewinkelt sind zu den komplementären Oberflächen.

**24.** Verfahren nach Anspruch 23, **dadurch gekennzeichnet, dass** man die durch den Zertrennungsschritt neu entstandenen Oberflächen durch Läppen und/oder Polieren, vorzugsweise durch Doppelläppen und/oder Doppelpolieren bearbeitet, derart, dass an jeweils zwei der weiteren Teilkörper (24) komplementäre Oberflächen (24') entstehen, vorzugsweise mit einer Planität, die höchstens 20, vorzugsweise höchstens 10, besonders bevorzugt höchstens 3 Interferenzringe bei der Überprüfung mittels Interferometer ergibt.

**25.** Verfahren nach einem der Ansprüche 18 bis 24, **dadurch gekennzeichnet, dass** man mehrere der zusammengesetzten Teilkörper (26) gemeinsam bearbeitet und durchgehend beschichtet.

**26.** Verfahren nach einem der Ansprüche 18 bis 25, **dadurch gekennzeichnet, dass** man die durchgehende Oberfläche selber mit dem weiteren Schichtsystem (7) versieht.

**27.** Verfahren nach einem der Ansprüche 18 bis 26, **dadurch gekennzeichnet, dass** man auf die gegebenenfalls mit dem weiteren Schichtsystem (7) versehene durchgehende Oberfläche eine zu dieser Oberfläche komplementäre Oberfläche mindestens eines weiteren Teilkörpers (24'') des Bauelementes aufbringt.

**28.** Verfahren nach Anspruch 27, **dadurch gekennzeichnet, dass** man als weiteren Teilkörper einen weiteren zusammengesetzten Teilkörper (24, 26) aufbringt.

**29.** Verfahren nach Anspruch 28, **dadurch gekennzeichnet, dass** man die optisch wirksamen Schichtsysteme (5', 5'') an den aufeinander gebrachten, zusammengesetzten Teilkörpern (24, 26, 24', 26') sich gegenüberliegend an das weitere Schichtsystem (7) stossend anordnet, vorzugsweise mit einem Stossstellenversatz von höchstens 2 μm.

**30.** Verfahren nach Anspruch 29, **dadurch gekennzeichnet, dass** die durchgehenden Oberflächen der beiden zusammengesetzten Teilkörper plan ausgebildet werden und die optisch wirksamen Schichtsysteme (5', 5'') an den zusammengesetzten Teilkörpern senkrecht zu den durchgehenden Oberflächen verlaufend angeordnet werden, vorzugsweise mit einer Abweichung bezüglich 90° von höchstens 20 Winkelsekunden.

**31.** Verfahren nach einem der Ansprüche 18 bis 30, **dadurch gekennzeichnet, dass** darnach der zusammengesetzte Teilkörper oder die zusammengesetzten Teilkörper gemeinsam zur Bildung von Bauelementen (22) so zertrennt werden, dass die abgetrennten Teile beide der optisch wirksamen Schichtsysteme umfassen.

**32.** Verfahren nach einem der Ansprüche 18 bis 31, **dadurch gekennzeichnet, dass** man mindestens eines der Schichtsysteme als dielektrisches Schichtsystem, vorzugsweise durch ein plasma- und/oder ionengestütztes Beschichtungsverfahren, vorzugsweise durch ein genügend kaltes PVD- oder PECVD-Verfahren, insbesondere aber durch ein Kaltbeschichtungsverfahren mit Substrattemperatur von höchstens 150°C, vorzugsweise von höchstens 80°C aufbringt.

**33.** Verfahren nach einem der Ansprüche 18 bis 32, **dadurch gekennzeichnet, dass** man mindestens eines der Schichtsysteme mit mindestens einer dielektrischen Schicht herstellt, vorzugsweise als Reflektorschichtsystem, als Polarisatorschichtsystem oder als Farbteilerschichtsystem oder als Antireflexschichtsystem.

**34.** Verfahren nach einem der Ansprüche 18 bis 33, **dadurch gekennzeichnet, dass** man bei der mechanischen Oberflächenbearbeitung von Teilkörpern und/oder zusammengesetzten Teilkörpern und/oder des Bauelementes sich gegenüberliegende Flächen gleichzeitig bearbeitet, d.h. doppelbearbeitet, insbesondere durch Doppelläppen und/oder Doppelpolieren.

**35.** Verfahren nach einem der Ansprüche 18 bis 34, **dadurch gekennzeichnet, dass** man das weitere durchgehende Schichtsystem (7) als rotreflektierendes Schichtsystem ausbildet, vorzugsweise für S-polarisiertes, mit 45° auf das Schichtsystem einfallendes Licht, das eine Schichtsystem (5) als blaureflektierendes Schichtsystem, vorzugsweise für S-polarisiertes, mit 45° auf das Schichtsystem einfallendes Licht.

**36.** Verfahren nach einem der Ansprüche 18 bis 35, **dadurch gekennzeichnet, dass** man nach Verbinden der zusammengesetzten Teilkörper den resultierenden Körper so formt, dass die Schichtsysteme (5', 5'', 7) in Kanten des resultierenden Körpers (1') an die Oberfläche stossen und darnach den geformten Körper in Einzelkörper auftrennen.

**37.** Verfahren nach Anspruch 36, **dadurch gekennzeichnet, dass** man das Formen des Körpers durch Sägen vornimmt und dadurch Flächen bildet, die im wesentlichen mit 45° zu den Schichtsystemem stehen, vorzugsweise mit einer Genauigkeit von mindestens 2 Winkel-Minuten, dass man anschliessend diese Flächen durch Läppen und/oder Polieren, vorzugsweise durch Doppelläppen und/oder Doppelpolieren, bearbeitet und vorzugsweise mit einem Antireflex-Schichtsystem beschichtet.

**38.** Verfahren nach einem der Ansprüche 18 bis 37, **dadurch gekennzeichnet, dass** man das Bauelement aus quaderförmigen Teilkörpern zusammensetzt und erst zuletzt zu Quaderflächen schiefwinklige Flächen anformt.

**39.** Verwendung eines Bauelementes nach einem der Ansprüche 1 bis 17 bzw. des Verfahrens zur Herstellung eines Bauelementes nach einem der Ansprüche 18 bis 38 als X-Cube bzw. für die Herstellung eines solchen.

**40.** Optische Projektionsanordnung mit mindestens einem als X-Cube ausgebildeten Bauelement nach einem der Ansprüche 1 bis 17.

**41.** CCD-Kamera mit einem X-Cube nach einem der Ansprüche 1 bis 17 für die Farbaufteilung.

**Claims**

**1.** Optical device comprising:

- a base body (20', 20"),
- a first optically effective layer system (7) which lies with at least the one layer system surface on a surface ($\triangledown\triangledown\triangledown$) of the base body (20', 20"),
- a second optically effective layer system (5') embedded in the base body (20', 20") and terminating at a joint area with a wide surface corresponding to the thickness extension of the second layer system at the surface ($\triangledown\triangledown\triangledown$) of the base body,

which device is suitable for optical use by means of the layer systems and the joint area, **characterised in that** the surface ($\triangledown\triangledown\triangledown$) of the base body and the wide surface of the second layer system (5) are simultaneously surface-machined throughout in the same manner.

**2.** Device according to claim 1, **characterised in that** the first layer system (7) in the joint area (30) is indented in the direction towards the second layer system with an indentation depth of maximum 5 $\mu$m, preferably maximum 2 $\mu$m.

**3.** Device according to claim 1 or 2, **characterised in that** at least one and preferably both layer systems (7, 5') comprise a succession of optically high and low refractive index layers, where the high refractive index layers consist preferably mainly of an oxide or oxinitride, preferably of at least one of the materials
$TiO_2$, $Ta_2O_5$, $Nb_2O_5$, $HfO_2$, $ZrO_2$, $SiO_xN_y$,
that furthermore the low refractive layers preferably consist at least mainly of an oxide or oxinitride preferably of at least one of the materials
$SiO_2$, $Al_2O_3$, $SiO_xN_y$.

**4.** Device according to any of claims 1 to 3, **characterised in that** the packing density of the layers in the layer systems is at least 0.95, preferably at least 0.97.

**5.** Device according to any of claims 1 to 4, **characterised in that** between 20°C and 100°C, the layer systems have a spectral shift in their spectral properties of maximum 5 nm, preferably maximum 2 nm.

**6.** Optical device according to any of claims 1 to 5, **characterised in that**

- the layer systems comprise a succession of optically high and low refractive index layers,
- the high refractive index layers consist at least mainly of an oxide or oxinitride, preferably of at least one of the materials $TiO_2$, $Ta_2O_5$, $Nb_2O_5$, $HfO_2$, $ZrO_2$, $SiO_xN_y$,
- the low refractive index layers consist at least mainly of an oxide or oxinitride, preferably of at least one of the materials $SiO_2$, $Al_2O_3$, $SiO_xN_y$,

- the packing density of the layers is at least 0.95,
- the layer systems at ambient temperatures between 20°C and 100°C have a shift in their spectral properties of maximum 5 nm.

7.  Device according to any of claims 1 to 6, **characterised in that** the base body consists of at least two parts (20', 20") cemented along one of the layer systems and the thickness of the cement layer is maximum 10 µm, preferably maximum 3 µm.

8.  Device according to any of claims 1 to 7, **characterised in that** the first layer system (7) at least in one area is embedded in the base body (20", 20', 24").

9.  Device according to claim 8, **characterised in that** a third layer system (5") is provided which abuts the second surface of the first layer system (7) at an angle, where further preferably:

    - the second (5') and third (5") layer systems lie with their wide surfaces opposite each other, preferably with an offset of maximum 2 µm, and/or
    - terminate in the joint areas at essentially the same angles to the base body surface, preferably at angles deviating by no more than 20 angle seconds.

10. Device according to any of claims 1 to 9, **characterised in that** at least two of the bodies (20', 20", 24") separated in the layer system consist of materials of the same optical properties.

11. Device according to any of claims 1 to 10, **characterised in that** the base body parts (20', 20", 24") holding the layer systems between them are joined by wringing.

12. Device according to any of claims 1 to 11, **characterised in that** the base body parts (20', 20", 24") holding in each case one of the layer systems (5', 5", 7) between them consist of glass and/or a plastic, preferably a BK7 glass, polycarbonate or PMMA.

13. Device according to any of claims 1 to 12, **characterised in that** the layer systems (5', 5", 7) are effective in the visible light range.

14. Device according to claim 13, **characterised in that** at least one of the base body parts (20', 20", 24") holding the layer systems (5', 5", 7) between them is transparent in the visible light range.

15. Device according to any of claims 8 to 14, **characterised in that** the first layer system (7) is planar, the wide surfaces of the second (5') and third (5") lie opposite each other preferably with an offset of maximum 2 µm, and that further preferably the first (7), second (5') and third (5") layer systems lie in the diagonal surface of a base body (1') formed as a cube.

16. Device according to claim 15, **characterised in that** it is an X-cube and preferably the first layer system (7) essentially reflects selectively light in the visible RED range, in contrast essentially transmits at least largely light in the visible BLUE and GREEN ranges, and further preferably the second (5') and third (5") layer systems at least largely reflect light in the visible BLUE range and correspondingly at least largely transmit light in the GREEN and RED ranges respectively.

17. Device according to any of claims 1 to 16, **characterised in that** at least one of the layer systems has at least one dielectric layer and preferably forms a polariser layer system or a colour filter layer system or an antireflection layer system, thereby preferably a red or blue reflector system for S-polarised light with 45° angle of incidence.

18. Process for manufacturing of a device according to at least one of claims 1 to 17, **characterised in that**:

    - on at least two part bodies (20', 20") a surface respectively is produced which surfaces are complementary to each other,
    - at least one of these complementary surfaces (20") is provided with an optically effective layer system (5'),
    - the part bodies (20', 20") are joined together along the said complementary surfaces with the layer system (5') in-between and thus form an assembled part body (24),
    - on the assembled part body (24) a through surface is mechanically machined which is angled to the complementary surfaces and whereat these abut in a joint area,

- along this through surface (24') is provided a further optically effective layer system (7).

19. Process according to claim 18, **characterised in that** the through surface is machined by milling and/or grinding and/or lapping and/or polishing, preferably with a flatness which gives maximum 20 Newton's rings, preferably maximum 10, in particular maximum 5, when tested with an interferometer.

20. Process according to claim 18 or 19, **characterised in that** the complementary surfaces are produced by lapping and/or polishing, preferably by double lapping and/or double polishing, preferably with a flatness which gives maximum 20 Newton's rings, preferably maximum 10, in particular preferably maximum 5 Newton's rings when tested with an interferometer.

21. Process according to any of claims 18 to 20, **characterised in that** the part bodies are joined by cementing with an optical cement, preferably by means of a UV-hardening cement, preferably with a cement layer thickness of maximum 10 μm, preferably maximum 3 μm.

22. Process according to claim 21, **characterised in that** the surface-machining is performed so that it creates an indentation in the joint area of maximum 5 μm, preferably maximum 2 μm.

23. Process according to any of claims 18 to 22, **characterised in that** the assembled part bodies are divided by separation, preferably by cutting, into further part bodies (24) and as a result two further surfaces are created which are angled to the complementary surfaces.

24. Process according to claim 23, **characterised in that** the new surfaces resulting from the separation step are machined by lapping and/or polishing, preferably by double lapping and/or double polishing, such that on each two of the further part bodies (24) complementary surfaces (24') are created, preferably with a flatness which gives maximum 20, preferably maximum 10, particularly preferably maximum 3 Newton's rings when tested with an interferometer.

25. Process according to any of claims 18 to 24, **characterised in that** several of the assembled part bodies (26) are processed and layered throughout together.

26. Process according to any of claims 18 to 25, **characterised in that** the through surface itself is provided with the further layer system (7).

27. Process according to any of claims 18 to 26, **characterised in that** the on through surface, where applicable having the further layer system (7) there is applied a surface complementary to this surface of at least one further part body (24") of the device.

28. Process according to claim 27, **characterised in that** as the further part body, a further assembled part body (24, 26) is applied.

29. Process according to claim 28, **characterised in that** the optically effective layer systems (5', 5") at the assembled part bodies (24, 26, 24', 26') placed on each other are arranged opposed and abutting each other at the further layer system (7), preferably with an abutment joint offset by maximum 2 μm.

30. Process according to claim 29, **characterised in that** the through surfaces of the two assembled part bodies are formed planar and the optically effective layer systems (5', 5") at the assembled part bodies are arranged vertically to the through surfaces, preferably with a deviation from 90° of maximum 20 angle seconds.

31. Process according to any of claims 18 to 30, **characterised in that** then the assembled part body or bodies are then jointly separated to form elements (22) so that the separated parts comprise both the optically effective layer systems.

32. Process according to any of claims 18 to 31, **characterised in that** at least one of the layer systems is applied as a dielectric layer system, preferably by a plasma- and/or ion-supported coating process, preferably by a sufficiently cold PVD or PECVD process, in particular however by a cold coating process with a substrate temperature of maximum 150°C, preferably maximum 80°C.

**33.** Process according to any of claims 18 to 32, **characterised in that** at least one of the layer systems is produced with at least one dielectric layer, preferably as a reflector layer system, a polariser layer system or a colour splitter layer system or an antireflection layer system.

**34.** Process according to any of claims 18 to 33, **characterised in that** in the surface machining of part bodies and/ or assembled part bodies and/or the device, opposing surfaces are treated simultaneously i.e. double-machined, in particular by double lapping and/or double polishing.

**35.** Process according to any of claims 18 to 34, **characterised in that** the further through layer system (7) is formed as a red-reflective layer system, preferably for S-polarised light incident on the layer system at 45°, the one layer system (5) is formed as a blue-reflective layer system, preferably for S-polarised light incident on the layer system at 45°.

**36.** Process according to any of claims 18 to 35, **characterised in that** after joining the assembled part bodies the resulting body is formed so that the layer systems (5', 5", 7) abut the surface in the edges of the resultant body (1'), and then the formed body is separated into individual bodies.

**37.** Process according to claim 36, **characterised in that** the body is formed by sawing and hence surfaces are formed which stand essentially at 45° to the layer systems, preferably with a precision of at least 2 angle minutes, that then these surfaces are machined by lapping and/or polishing, preferably by double lapping and/or double polishing, and preferably coated with an antireflection layer system.

**38.** Process according to any of claims 18 to 37, **characterised in that** the device is composed of cuboid part bodies and only at the end surfaces are formed at an oblique angle to the cube surfaces.

**39.** Use of the device according to any of claims 1 to 17 or of the process for production of a device according to any of claims 18 to 38 as an X-cube or for the production of such a cube.

**40.** Optical projection arrangement with at least one device according to any of claims I to 17 formed as an X-cube.

**41.** CCD camera with an X-cube according to any of claims 1 to 17 for colour splitting.

**Revendications**

**1.** Composant optique comprenant :

- un corps de base (20', 20"),
- un premier système de couches à action optique (7) qui est appliqué avec au moins une surface du système de couches contre une surface (▽▽▽) du corps de base (20', 20"),
- un deuxième système de couches à action optique (5') qui est encastré dans le corps de base (20', 20") et qui débouche dans une zone de jointure avec une surface large correspondant à l'épaisseur du deuxième système, au niveau de la surface (▽▽▽) du corps de base,

lequel composant optique convient pour une utilisation optique à l'aide des systèmes de couches et de la zone de jointure,
**caractérisé en ce que** la surface (▽▽▽) du corps de base et la surface large du deuxième système de couches (5) sont soumises simultanément et en continu à un traitement superficiel mécanique identique.

**2.** Composant selon la revendication 1, **caractérisé en ce que** le premier système de couches (7) est creusé dans la zone de jointure (30), en direction du deuxième système de couches, avec une profondeur de creux de 5 μm au maximum, de préférence de 2 μm au maximum.

**3.** Composant selon la revendication 1 ou 2, **caractérisé en ce qu'**au moins un système de couches (7, 5'), de préférence les deux, comprend une succession de couches à réfraction optique élevée et faible, les couches à réfraction élevée se composant principalement, de préférence, d'un oxyde ou d'un oxynitrure, de préférence de l'un au moins des matériaux suivants :
$TiO_2$, $Ta_2O_5$, $Nb_2O_5$, $HfO_2$, $ZrO_2$, $SiO_xN_y$,

et **en ce que** les couches à réfraction faible se composent principalement, de préférence, d'un oxyde ou d'un oxynitrure, de préférence de l'un au moins des matériaux suivants :

$SiO_2$, $Al_2O_3$, $SiO_xN_y$.

4. Composant selon l'une des revendication 1 à 3, **caractérisé en ce que** la densité de tassement des couches des systèmes de couches est d'au moins 0,95, de préférence d'au moins 0,97.

5. Composant selon l'une des revendications 1 à 4, **caractérisé en ce que** les systèmes de couches, entre 20°C et 100°C, présentent un décalage spectral de leurs caractéristiques spectrales de 5 nm au maximum, de préférence de 2 nm au maximum.

6. Composant optique selon l'une des revendications 1 à 5, **caractérisé en ce que**

- les systèmes de couches comprennent une succession de couches à réfraction optique élevée et faible,
- les couches à réfraction élevée se composent au moins principalement d'un oxyde ou d'un oxynitrure, de préférence de l'un au moins des matériaux suivants :
  $TiO_2$, $Ta_2O_5$, $Nb_2O_5$, $HfO_2$, $ZrO_2$, $SiO_xN_y$,
- les couches à réfraction faible se composent au moins principalement d'un oxyde ou d'un oxynitrure, de préférence de l'un au moins des matériaux suivants :
  $SiO_2$, $Al_2O_3$, $SiO_xN_y$,

  - la densité de tassement des couches est d'au moins 0,95,
  - les systèmes de couches, à des températures ambiantes situées entre 20°C et 100°C, présentent un décalage de leurs caractéristiques spectrales de 5 nm au maximum.

7. Composant selon l'une des revendications 1 à 6, **caractérisé en ce que** le corps de base se compose d'au moins deux parties (20', 20") collées le long de l'un des systèmes de couches, et l'épaisseur de la couche de colle est de 10 µm au maximum, de préférence de 3 µm au maximum.

8. Composant selon l'une des revendications 1 à 7, **caractérisé en ce que** le premier système de couches (7) est encastré, au moins dans une zone, à l'intérieur du corps de base (20", 20', 24").

9. Composant selon la revendication 8, **caractérisé en ce qu'**il est prévu un troisième système de couches (5") qui est contigu à la seconde surface du premier système de couches (7) suivant un certain angle, étant précisé que de préférence :

  - les deuxième (5') et troisième (5") systèmes de couches se font face avec leurs surfaces larges, de préférence avec un décalage de 2 µm au maximum et/ou
  - débouchent dans les zones de jointure suivant des angles sensiblement identiques par rapport à la surface du corps de base, de préférence suivant des angles qui ne diffèrent pas de plus de 20 secondes d'angle.

10. Composant selon l'une des revendications 1 à 9, **caractérisé en ce qu'**au moins deux des corps (20', 20", 24") séparés par un système de couches se composent de matériaux ayant les mêmes caractéristiques optiques.

11. Composant selon l'une des revendications 1 à 10, **caractérisé en ce que** les parties de corps de base (20', 20", 24") qui reçoivent entre elles les systèmes de couches sont reliées par adhérence.

12. Composant selon l'une des revendications 1 à 11, **caractérisé en ce que** les parties de corps de base (20', 20", 24) qui reçoivent entre elles l'un des systèmes de couches (5', 5", 7) se composent de verre et/ou d'une matière plastique, de préférence de verre BK7, de polycarbonate ou de PMMA.

13. Composant selon l'une des revendications 1 à 12, **caractérisé en ce que** les systèmes de couches (5', 5", 7) sont actifs dans la zone de lumière visible.

14. Composant selon la revendication 13, **caractérisé en ce que** l'une au moins des parties de corps de base (20', 20", 24") qui reçoivent entre elles les systèmes de couches (5', 5", 7) est transparente dans la zone de lumière visible.

15. Composant selon l'une des revendications 8 à 14, **caractérisé en ce que** le premier système de couches (7) est plan, les surfaces larges des deuxième (5') et troisième (5'') se font face, de préférence avec un décalage de 2 µm au maximum, et **en ce que** les premier (7), deuxième (5') et troisième (5'') systèmes de couches se trouvent de préférence dans des surfaces diagonales d'un corps de base (1') en forme de parallélipipède.

16. Composant selon la revendication 15, **caractérisé en ce qu'**il s'agit d'un cube X et, de préférence, le premier système de couches (7) réfléchit sélectivement au moins largement la lumière dans la zone ROUGE visible et la transmet au moins largement, au contraire, dans les zones BLEUE et VERTE visibles, et, de préférence, les deuxième (5') et troisième (5'') systèmes de couches réfléchissent au moins largement la lumière dans la zone BLEUE visible et en conséquence transmettent au moins largement la lumière dans les zones VERTE et ROUGE.

17. Composant selon l'une des revendications 1 à 16, **caractérisé en ce que** l'un au moins des systèmes de couches comporte au moins une couche diélectrique et forme de préférence un système de couches polarisant ou un système de couches formant filtre chromatique ou un système de couches antireflet, et de préférence un système de réflecteur rouge ou bleu pour la lumière polarisée S avec un angle d'incidence de 45°.

18. Procédé pour fabriquer un composant selon l'une au moins des revendications 1 à 17, **caractérisé**

   - **en ce qu'**on réalise sur au moins deux corps partiels (20', 20'') deux surfaces respectives qui sont complémentaires,
   - **en ce qu'**on dote l'une au moins de ces surfaces complémentaires (20'') d'un système de couches à action optique (5'),
   - **en ce qu'**on relie les corps partiels (20', 20'') entre eux le long desdites surfaces complémentaires, avec le système de couches (5') entre les deux, et on forme ainsi un corps partiel composé (24),
   - **en ce que** sur le corps partiel composé (24), on soumet à un traitement de surface mécanique une surface continue qui forme un angle par rapport aux surfaces complémentaires et à laquelle celles-ci sont contiguës dans une zone de jointure, et
   - **en ce qu'**on prévoit (24'), le long de ces surfaces continues, un autre système de couches à action optique (7).

19. Procédé selon la revendication 18, **caractérisé en ce qu'**on usine la surface continue par fraisage et/ou meulage et/ou rodage et/ou polissage, de préférence avec une planéité qui donne, lors du contrôle avec un interféromètre, au maximum 20 anneaux d'interférence, de préférence au maximum 10 et plus spécialement 5.

20. Procédé selon la revendication 18 ou 19, **caractérisé en ce qu'**on réalise les surfaces complémentaires par rodage et/ou polissage, de préférence par double rodage et/ou double polissage, de préférence avec une planéité qui donne, lors du contrôle avec un interféromètre, au maximum 20 anneaux d'interférence, de préférence au maximum 10 et plus spécialement 5.

21. Procédé selon l'une des revendications 18 à 20, **caractérisé en ce qu'**on relie les corps partiels par collage à l'aide d'une colle optique, de préférence une colle qui durcit aux UV, de préférence avec une épaisseur de couche de colle de 10 µm au maximum, de préférence de 3 µm au maximum.

22. Procédé selon la revendication 21, **caractérisé en ce qu'**on procède à l'usinage mécanique des surfaces de telle sorte que cela forme, dans la zone de jointure, un creux de 5 µm au maximum, de préférence de 2 µm au maximum.

23. Procédé selon l'une des revendications 18 à 22, **caractérisé en ce qu'**on divise le corps partiel composé en le séparant, de préférence par sciage, en corps partiels supplémentaires (24) et on crée ainsi à chaque fois deux surfaces supplémentaires qui forment un angle par rapport aux surfaces complémentaires.

24. Procédé selon la revendication 23, **caractérisé en ce que** les nouvelles surfaces formées par la séparation sont usinées par rodage et/ou polissage, de préférence par double rodage et/ou double polissage, de telle sorte qu'il se forme, sur au moins deux des corps partiels supplémentaires (24), des surfaces complémentaires (24'), de préférence avec une planéité qui donne, lors du contrôle avec un interféromètre, au maximum 20, de préférence au maximum et plus spécialement au maximum 3 anneaux d'interférence.

25. Procédé selon l'une des revendications 18 à 24, **caractérisé en ce qu'**on usine conjointement et on revêt de manière continue plusieurs des corps partiels composés (26).

26. Procédé selon l'une des revendications 18 à 25, **caractérisé en ce qu'**on dote la surface continue elle-même de l'autre système de couches (7).

27. Procédé selon l'une des revendications 18 à 26, **caractérisé en ce qu'**on applique sur la surface continue, éventuellement pourvue de l'autre système de couches (7), une surface, complémentaire par rapport à cette surface, d'au moins un corps partiel supplémentaire (24") du composant.

28. Procédé selon la revendication 27, **caractérisé en ce qu'**on applique comme corps partiel supplémentaire un corps partiel composé supplémentaire (24, 26).

29. Procédé selon la revendication 28, **caractérisé en ce qu'**on applique les systèmes de couches à action optique (5', 5") sur les corps partiels composés posés l'un sur l'autre (24, 26, 24', 26') l'un en face de l'autre, près du système de couche supplémentaire (7), de préférence avec un décalage de jointure de 2 µm au maximum.

30. Procédé selon la revendication 29, **caractérisé en ce que** les surfaces continues des deux corps partiels composés sont planes et les systèmes de couches à action optique (5', 5") sont disposés sur les corps partiels composés perpendiculairement aux surfaces continues, de préférence avec un écart par rapport à 90° de 20 secondes d'angle au maximum.

31. Procédé selon l'une des revendications 18 à 30, **caractérisé en ce qu'**on sépare ensuite le corps partiel composé ou les corps partiels composés, conjointement, pour former des composants (22) de telle sorte que les éléments séparés comprennent tous les deux les systèmes de couches à action optique.

32. Procédé selon l'une des revendications 18 à 31, **caractérisé en ce qu'**on applique l'un au moins des systèmes de couches sous la forme d'un système de couches diélectrique, de préférence grâce à un procédé d'enduction avec utilisation d'un plasma et/ou d'ions, de préférence grâce à un procédé suffisamment froid de dépôt physique en phase vapeur ou de dépôt chimique en phase vapeur avec utilisation d'un plasma, mais en particulier grâce à un procédé d'enduction à froid, à une température de substrat de 150°C au maximum, de préférence de 80°C au maximum.

33. Procédé selon l'une des revendications 18 à 32, **caractérisé en ce qu'**on fabrique l'un au moins des systèmes de couches avec au moins une couche diélectrique, de préférence sous la forme d'un système de couche de réflexion, d'un système de couche de polarisation, d'un système de couche de séparation chromatique ou d'un système de couche antireflet.

34. Procédé selon l'une des revendications 18 à 33, **caractérisé en ce que**, lors de l'usinage superficiel mécanique de corps partiels et/ou de corps partiels composés et/ou du composant, on usine les surfaces opposées en même temps, c'est-à-dire par usinage double, notamment par rodage double et/ou polissage double.

35. Procédé selon l'une des revendications 18 à 34, **caractérisé en ce que** l'on conçoit l'autre système de couches continu (7) comme un système de couches réfléchissant le rouge, de préférence pour la lumière polarisée S qui arrive à 45° sur le système de couches, et le système de couches (5) comme un système réfléchissant le bleu, de préférence pour la lumière polarisée S qui arrive à 45° sur le système de couches.

36. Procédé selon l'une des revendications 18 à 35, **caractérisé en ce que**, après avoir relié les corps partiels composés, on façonne le corps résultant de telle sorte que les systèmes de couches (5', 5", 7) soient contigus à la surface dans des bords dudit corps résultant (1') et séparent ensuite le corps façonné en corps individuels.

37. Procédé selon la revendication 36, **caractérisé en ce que** l'on procède au façonnage du corps par sciage et on forme ainsi des surfaces qui sont situées sensiblement à 45° par rapport aux systèmes de couches, de préférence avec une précision d'au moins 2 minutes d'angle, **en ce qu'**on usine ensuite ces surfaces par rodage et/ou polissage, de préférence par double rodage et/ou double polissage et on les recouvre de préférence d'un système de couches antireflet.

38. Procédé selon l'une des revendications 18 à 37, **caractérisé en ce qu'**on assemble le composant à partir de corps partiels parallélipipédiques et on ne forme qu'en dernier des surfaces qui définissent un angle oblique avec les surfaces du parallélipipède.

**39.** Utilisation d'un composant selon l'une des revendications 1 à 17 ou du procédé pour fabriquer un composant selon l'une des revendications 18 à 38 sous la forme d'un cube X, ou pour la fabrication de celui-ci.

**40.** Dispositif de projection optique avec au moins un composant selon l'une des revendications 1 à 17 conçu comme un cube X.

**41.** Caméra CCD avec un cube X selon l'une des revendications 1 à 17 pour la séparation chromatique.

FIG.1

FIG.2

FIG.3

FIG.4a

FIG.4b

FIG.4c

FIG.4d

FIG.4e

FIG.4f

FIG.4g

FIG.4h

FIG.5

FIG.6

FIG.7

FIG.8

FIG.9

FIG. 10

FIG.11